# EUROPEAN PATENT APPLICATION

(11) **EP 4 832 135 A1**
(43) Date of publication of application: **28.10.2026**
(21) Application number: 24908043.3
(22) Date of filing: 17.12.2024
(51) Int. Cl.: H01M 10/0562, H01M 10/052

(54) **SOLID ELECTROLYTE AND ALL-SOLID-STATE BATTERY COMPRISING SAME**

(30) Priority: 18.12.2023 KR 20230185168
(71) Applicant: POSCO Holdings Inc., Pohang-si, Gyeongsangbuk-do 37859 (KR)
(72) Inventor: OH, Gwangseok, Pohang-si, Gyeongsangbuk-do 37859 (KR); NAM, Sang Cheol, Pohang-si, Gyeongsangbuk-do 37859 (KR); KWON, Ohmin, Pohang-si, Gyeongsangbuk-do 37859 (KR)
(74) Representative: Pfenning, Meinig & Partner mbB
(86) International application number: PCT/KR2024/020551
(87) International publication number: WO 2025/135760

(57) **Abstract**

The present invention relates to a sulfide-based solid electrolyte including a compound containing lithium (Li), phosphorus (P), sulfur (S), and a halogen element (D), and having an argyrodite-based crystal structure, wherein at least a portion of the crystal structure is doped with indium (In) and tin (Sn), and ionic conductivity at 30°C is 3.21 mS/cm or more.

## Description

### [TECHNICAL FIELD]

The present invention relates to a solid electrolyte and an all-solid-state battery including the same.

### [BACKGROUND ART]

As research on safety problems and energy density of high-capacity batteries has attracted attention, all-solid-state batteries have been spotlighted as next-generation batteries.

The all-solid-state battery is a battery in which safety of the battery is secured by replacing a liquid electrolyte, which may cause explosion, with a solid electrolyte, and thus a flammable solvent is not used in the battery, and ignition or explosion due to reactions such as decomposition reactions of a conventional electrolyte solution does not occur at all.

In addition, since lithium metal or a lithium alloy can be used as a negative electrode material, energy density with respect to the mass and volume of the battery can be improved.

As a solid electrolyte used in the all-solid-state battery, an inorganic solid electrolyte is generally used, and various studies are being conducted on sulfide-based solid electrolytes having a composition such as Li₆PS₅Cl, which has an argyrodite crystal structure, among the all-solid-state batteries.

However, when the sulfide-based solid electrolyte is configured as a cell, there is a problem in that the sulfide-based solid electrolyte exhibits inferior cell characteristics due to low lithium ion conductivity compared with a liquid electrolyte used in a conventional commercial lithium ion battery.

### [DETAILED DESCRIPTION OF THE INVENTION]

### [Technical Problem]

Accordingly, one object of the present invention is to provide a sulfide-based solid electrolyte having excellent ionic conductivity and an all-solid-state battery including the same.

### [Technical Solution]

One embodiment of the present invention provides a sulfide-based solid electrolyte including a compound containing lithium (Li), phosphorus (P), sulfur (S), and a halogen element (D), and having an argyrodite-based crystal structure, wherein at least a portion of the crystal structure is doped with indium (In) and tin (Sn), and ionic conductivity at 30°C is 3.21 mS/cm or more.

The compound may have a molar ratio of indium (In) to the compound of 0.013 to 0.055.

The compound may have a molar ratio of indium (In) to phosphorus (P), [In]/[P], of 0.014 to 0.065.

The compound may have a molar ratio of tin (Sn) to the compound of 0.035 to 0.45.

The compound may have a molar ratio of tin (Sn) to phosphorus (P), [Sn]/[P], of 0.03 to 0.85.

The compound may have a molar ratio of lithium (Li) to the compound of 3 to 5.7.

The compound may have a molar ratio of sulfur (S) to the compound of 2.7 to 4.75.

The compound may have a molar ratio of phosphorus (P) to the compound of 0.55 to 0.945.

The compound may have a molar ratio of the halogen element (D) to the compound of 1.15 to 2.4.

The compound may have a molar ratio of the halogen element (D) to phosphorus (P), [D]/[P], of 1.2 to 4.5.

The compound may be represented by the following Chemical Formula 1.

[Chemical Formula 1] Li_{6(1-x-y)}InₓSn_{y}P_{(1-x-y)}S_{5(1-x-y)}D_{1(1-x-y)+3x+4y}

In Chemical Formula 1, 0.013≤x≤0.055 and 0.035≤y≤0.45, and D is a halogen element and is F, Cl, Br, I, or a combination thereof.

In Chemical Formula 1, 0.02≤x≤0.035 may be satisfied.

In Chemical Formula 1, 0.08≤y≤0.17 may be satisfied.

The compound may exhibit a peak in a range of 30.2°≤2θ≤30.3° when analyzed by an X-ray diffraction (XRD) pattern.

Another embodiment of the present invention provides an all-solid-state battery including: a positive electrode layer; a negative electrode layer; and a solid electrolyte layer positioned between the positive electrode layer and the negative electrode layer, wherein at least one of the positive electrode layer, the negative electrode layer, and the solid electrolyte layer includes the above-described solid electrolyte.

### [Advantageous Effects]

The sulfide-based solid electrolyte according to one embodiment of the present invention includes a compound in which at least a portion of an argyrodite-based crystal structure is doped with indium (In) and tin (Sn), and thus ionic conductivity can be improved.

### [BRIEF DESCRIPTION OF THE DRAWINGS]

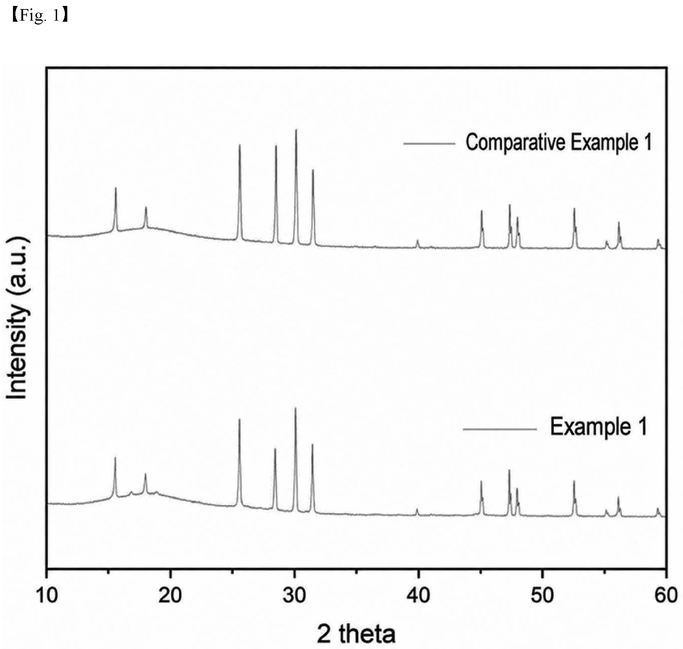

FIG. 1 is a graph showing results of X-ray diffraction pattern analysis of solid electrolytes manufactured according to Example 1 and Comparative Example 1.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Solid Electrolyte

The sulfide-based solid electrolyte according to one embodiment of the present invention includes a compound containing lithium (Li), phosphorus (P), sulfur (S), and a halogen element (D), and having an argyrodite-based crystal structure.

At this time, in the sulfide-based solid electrolyte according to one embodiment of the present invention, at least a portion of the argyrodite-based crystal structure is doped with indium (In) and tin (Sn). Accordingly, a large number of vacancies caused by lithium ion deficiency can be generated, various lithium ion paths (channels) can be formed, and lithium ion conductivity of the solid electrolyte can be greatly improved.

Meanwhile, in the sulfide-based solid electrolyte according to the present invention, doping amounts of indium (In) and tin (Sn) may be independently controlled. In other words, the doping amounts of indium and tin do not have a certain correlation with each other and may be randomly controlled as independent doping amounts. Accordingly, the above-described effect of improving ionic conductivity of the solid electrolyte can be preferably maximized.

At this time, the compound may have a molar ratio of indium (In) to the compound of 0.013 to 0.055, and more specifically 0.02 to 0.035.

Alternatively, the compound may have a molar ratio of indium (In) to phosphorus (P), [In]/[P], of 0.014 to 0.065, and more specifically 0.02 to 0.04.

When the content of indium is too small, the indium doping amount is too small, and thus the above-mentioned effect of improving ionic conductivity of the solid electrolyte may be insignificant. When the content of indium is too large, due to excessive doping, the argyrodite-based crystal structure is greatly deformed, lithium ion movement is not smooth, and indium does not form the argyrodite-based crystal structure and is present as an impurity phase, and thus ionic conductivity of the solid electrolyte may rather decrease. Therefore, when the content of indium satisfies the above range, the effect of improving ionic conductivity of the solid electrolyte can be preferably implemented.

The compound may have a molar ratio of tin (Sn) to the compound of 0.035 to 0.45, and more specifically 0.08 to 0.17.

Alternatively, the compound may have a molar ratio of tin (Sn) to phosphorus (P), [Sn]/[P], of 0.03 to 0.85, and more specifically 0.08 to 0.22.

When the content of tin is too small, the tin doping amount is too small, and thus the above-mentioned effect of improving ionic conductivity of the solid electrolyte may be insignificant. When the content of tin is too large, due to excessive doping, the argyrodite-based crystal structure is greatly deformed, lithium ion movement is not smooth, and tin does not form the argyrodite-based crystal structure and is present as an impurity phase, and thus ionic conductivity of the solid electrolyte may rather decrease. Therefore, when the content of tin satisfies the above range, the effect of improving ionic conductivity of the solid electrolyte can be preferably implemented.

The compound may have a molar ratio of lithium (Li) to the compound of 3 to 5.7, and more specifically 4.8 to 5.4.

Alternatively, the compound may have a molar ratio of lithium (Li) to phosphorus (P), [Li]/[P], of 5.5 to 6.5.

When the content of lithium in the compound according to the present invention satisfies the above range, the argyrodite-based crystal structure is completely maintained, and thus the effect of improving ionic conductivity of the solid electrolyte can be more preferably implemented.

The compound may have a molar ratio of sulfur (S) to the compound of 2.7 to 4.75, and more specifically 4 to 4.5.

Alternatively, the compound may have a molar ratio of sulfur (S) to phosphorus (P), [S]/[P], of 4.5 to 5.5.

When the content of sulfur in the compound according to the present invention satisfies the above range, the argyrodite-based crystal structure is completely maintained, and thus the effect of improving ionic conductivity of the solid electrolyte can be more preferably implemented.

The compound may have a molar ratio of phosphorus (P) to the compound of 0.55 to 0.945, and more specifically 0.8 to 0.9.

When the content of phosphorus in the compound according to the present invention satisfies the above range, the argyrodite-based crystal structure is completely maintained, and thus the effect of improving ionic conductivity of the solid electrolyte can be more preferably implemented.

The compound may have a molar ratio of the halogen element (D) to the compound of 1.15 to 2.4, and more specifically 1.25 to 1.55.

Alternatively, the compound may have a molar ratio of the halogen element (D) to phosphorus (P), [D]/[P], of 1.2 to 4.5, and more specifically 1.35 to 1.95.

When the content of the halogen element in the compound according to the present invention satisfies the above range, the argyrodite-based crystal structure is completely maintained, and thus the effect of improving ionic conductivity of the solid electrolyte can be more preferably implemented.

The compound according to the present invention may more specifically be represented by the following Chemical Formula 1.

[Chemical Formula 1] Li_{6(1-x-y)}InₓSn_{y}P_{(1-x-y)}S_{5(1-x-y)}D_{1(1-x-y)+3x+4y}

In Chemical Formula 1, 0.013≤x≤0.055 and 0.035≤y≤0.45, and D is a halogen element and is F, Cl, Br, I, or a combination thereof.

In Chemical Formula 1, x represents, in moles, the doping amount of indium, which is a doping element. At this time, 0.013≤x≤0.055 may be satisfied, and more specifically 0.02≤x≤0.035 may be satisfied.

When x is too small, the indium doping amount is too small, and thus the above-mentioned effect of improving ionic conductivity of the solid electrolyte may be insignificant. When x is too large, due to excessive doping, the argyrodite-based crystal structure is greatly deformed, lithium ion movement is not smooth, and tin does not form the argyrodite-based crystal structure and is present as an impurity phase, and thus ionic conductivity of the solid electrolyte may rather decrease. Therefore, when x satisfies the above range, the effect of improving ionic conductivity of the solid electrolyte can be preferably implemented.

In Chemical Formula 1, y represents, in moles, the doping amount of tin, which is a doping element. At this time, 0.035≤y≤0.45 may be satisfied, and more specifically 0.08≤y≤0.17 may be satisfied.

When y is too small, the tin doping amount is too small, and thus the above-mentioned effect of improving ionic conductivity of the solid electrolyte may be insignificant. When y is too large, due to excessive doping, the argyrodite-based crystal structure is greatly deformed, lithium ion movement is not smooth, and tin does not form the argyrodite-based crystal structure and is present as an impurity phase, and thus ionic conductivity of the solid electrolyte may rather decrease. Therefore, when y satisfies the above range, the effect of improving ionic conductivity of the solid electrolyte can be preferably implemented.

In Chemical Formula 1, D means a halogen element, and more specifically may be F, Cl, Br, I, or a combination thereof.

However, from the viewpoint of structural stabilization of the solid electrolyte, ease of synthesis, and reduction of process costs, the halogen element (D) may be Cl.

In addition, from the viewpoint of more preferably implementing ionic conductivity, the halogen element (D) may further include at least one element selected from Br and I, in addition to Cl.

At this time, a molar ratio of Cl to at least one element selected from Br and I, Cl:Br and/or I, may be 3:7 to 7:3, and more specifically 4:6 to 6:4. When the molar ratio of Cl to at least one element selected from Br and I, Cl:Br and/or I, satisfies the above range, ionic conductivity can be more preferably implemented.

The solid electrolyte may be in the form of particles or powder, and may be crystalline or amorphous.

In addition, the compound may exhibit a peak in a range of 30.2°≤2θ≤30.3° when analyzed by an X-ray diffraction (XRD) pattern. The peak in the above range means an argyrodite-based crystalline phase, and since the crystalline phase is included, ionic conductivity of the solid electrolyte and electrochemical characteristics of the battery can be preferably implemented.

Since the sulfide-based solid electrolyte according to one embodiment of the present invention is doped with indium and tin, ionic conductivity of the solid electrolyte is favorably implemented, and ionic conductivity at 30°C may be 3.21 mS/cm or more, and more specifically 3.5 mS/cm, 4.0 mS/cm, or 4.3 mS/cm or more.

### 2. Method for Manufacturing Solid Electrolyte

Another embodiment of the present invention provides a method for manufacturing a sulfide-based solid electrolyte, the method including: mixing a lithium raw material, a phosphorus raw material, a halogen element raw material, and a doping raw material to form a mixture; and heat-treating the mixture to form a compound having an argyrodite-based crystal structure, wherein the doping raw material includes an indium (In) compound and a tin (Sn) compound.

Hereinafter, the method for manufacturing a sulfide-based solid electrolyte according to another embodiment of the present invention will be described step by step.

First, a lithium raw material, a phosphorus raw material, a halogen element raw material, and a doping raw material are mixed to form a mixture.

At this time, the doping raw material includes an indium (In) compound and a tin (Sn) compound.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. More specifically, the halogen element raw material may be LiCl.

The indium (In) compound may more specifically be InCl₃. By using InCl₃ as the indium compound, a composition rich in Cl content can be designed while doping In, and thus the effect of improving ionic conductivity of the solid electrolyte can be more preferably implemented.

The tin (Sn) compound may more specifically be SnCl₄. By using SnCl₄ as the tin compound, a composition rich in Cl content can be designed while doping Sn, and thus the effect of improving ionic conductivity of the solid electrolyte can be more preferably implemented.

Input amounts of the lithium raw material, phosphorus raw material, halogen element raw material, and doping raw material may be appropriately controlled and input stoichiometrically in accordance with the composition of the sulfide-based solid electrolyte compound according to the present invention.

The mixing may be performed by mechanical mixing or chemical mixing.

The mechanical mixing may be performed, for example, by a method such as a planetary mill, a paint shaker, a ball mill, a bead mill, a homogenizer, a hammer mill, a turbo mill, a disc mill, a planetary mill, or mechanofusion.

The chemical mixing may be performed, for example, by a melt quenching method.

The mixing may be performed for 4 to 12 hours, specifically 6 to 10 hours, and more specifically 7 to 9 hours. When the mixing time is too short, there may be a problem in that mixing is insufficient. When the mixing time is too long, the mixing is completed after a certain time or more, and even when mixing is further continued, the mixing state becomes the same, causing a problem in terms of process efficiency.

The mixing may be performed at a rotation speed of 100 to 500 rpm, specifically 150 to 450 rpm, and more specifically 200 to 400 rpm. When the rotation speed is too slow, there may be a problem in that the balls cannot enter into the powder body, so that the powder particles are not entirely mixed with each other sufficiently, or energy is low, so that atomization of the powder particles occurs insufficiently. On the other hand, when the rotation speed is too fast, there may be a problem in that the powder bodies are biased to one place, so that uniform mixing occurs insufficiently.

Next, if necessary, after the step of forming the mixture, the method may further include compressing the mixture to form a pellet.

At this time, the compression may be performed at a pressure of 100 to 500 MPa, specifically 150 to 450 MPa, and more specifically 200 to 400 MPa. When the pressure is too low, there may be a problem in that bonding between powder particles is insufficient, thereby increasing interfacial resistance. On the other hand, when the pressure is too high, bonding between powder particles has already been achieved, and even when further pressure is applied, the bonding state does not change, causing a problem in terms of process efficiency. Therefore, forming the pellet at an appropriate pressure is preferable in terms of productivity.

Next, the mixture is heat-treated to form a sulfide-based solid electrolyte having an argyrodite-based crystal structure.

At this time, the heat treatment may be performed at a temperature of 400 to 700°C, and more specifically 500 to 600°C. When the heat treatment temperature is too low, synthesis of the solid electrolyte having an argyrodite-based crystal structure may not sufficiently occur, or the solid electrolyte may be synthesized with an amorphous crystal structure, and thus ionic conductivity of the solid electrolyte may decrease. When the heat treatment temperature is too high, elements constituting the solid electrolyte may be vaporized to cause loss of the solid electrolyte, or an impurity phase may be generated, and thus ionic conductivity of the solid electrolyte may decrease.

In addition, the heat treatment may be performed for 2 to 8 hours, and more specifically 3 to 5 hours. When the heat treatment time is too short, synthesis of the solid electrolyte having an argyrodite-based crystal structure may not sufficiently occur, or the solid electrolyte may be synthesized with an amorphous crystal structure, and thus ionic conductivity of the solid electrolyte may decrease. When the heat treatment time is too long, elements constituting the solid electrolyte may be vaporized to cause loss of the solid electrolyte, or an impurity phase may be generated, and thus ionic conductivity of the solid electrolyte may decrease.

In addition, the heat treatment may be performed in an inert gas atmosphere. Since the heat treatment is performed in an inert gas atmosphere, there may be an advantage of blocking contact with atmospheric moisture. The inert gas atmosphere may be, for example, an Ar, N₂, H₂, or He atmosphere, and more specifically may be an Ar atmosphere.

### 3. All-Solid-State Battery

Still another embodiment of the present invention provides an all-solid-state battery including: a positive electrode layer; a negative electrode layer; and a solid electrolyte layer positioned between the positive electrode layer and the negative electrode layer, wherein at least one of the positive electrode layer, the negative electrode layer, and the solid electrolyte layer includes the above-described solid electrolyte.

### (Positive Electrode Layer)

More specifically, the positive electrode layer may include a positive electrode current collector and a positive electrode active material layer disposed on the positive electrode current collector.

The positive electrode active material layer may include, for example, a positive electrode active material and, if necessary, may further selectively include a solid electrolyte. The solid electrolyte included in the positive electrode active material layer may be the same as or different from the solid electrolyte according to one embodiment of the present invention, and may be the same as or different from the solid electrolyte included in the solid electrolyte layer.

The positive electrode active material is a material capable of reversibly absorbing and desorbing lithium ions. The positive electrode active material may be, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate; nickel sulfide, copper sulfide, lithium sulfide, iron oxide, vanadium oxide, or the like, but is not necessarily limited thereto, and any material used as a positive electrode active material in the art may be used. The positive electrode active material may be used alone, or a mixture of two or more thereof may be used.

The lithium transition metal oxide may be, for example, a compound represented by any one of the following chemical formulas: LiₐA_{1-β}B_{β}D₂, wherein 0.90≤a≤1 and 0≤b≤0.5; LiₐE_{1-β}B_{β}O_{2-c}D_{c}, wherein 0.90≤a≤1, 0≤b≤0.5, and 0≤c≤0.05; LiE_{2-β}B_{β}O_{4-c}D_{c}, wherein 0≤b≤0.5 and 0≤c≤0.05; LiₐNi_{1-β-}cCo_{β}B_{c}D_{α}, wherein 0.90≤a≤1, 0≤b≤0.5, 0≤c≤0.05, and 0<α≤2; LiₐNi_{1-β-c}Co_{β}B_{c}O_{2-α}F_{α}, wherein 0.90≤a≤1, 0≤b≤0.5, 0≤c≤0.05, and 0<α<2; LiₐNi_{1-β-}cCo_{β}B_{c}O_{2-α}F₂, wherein 0.90≤a≤1, 0≤b≤0.5, 0≤c≤0.05, and 0<α<2; LiₐNi_{1-β-c}Mn_{β}B_{c}D_{α}, wherein 0.90≤a≤1, 0≤b≤0.5, 0≤c≤0.05, and 0<α≤2; LiₐNi_{1-β-c}Mn_{β}B_{c}O_{2-α}F_{α}, wherein 0.90≤a≤1, 0≤b≤0.5, 0≤c≤0.05, and 0<α<2; LiₐNi_{1-β-}cMn_{β}B_{c}O_{2-α}F₂, wherein 0.90≤a≤1, 0≤b≤0.5, 0≤c≤0.05, and 0<α<2; LiₐNi_{β}E_{c}G_{d}O₂, wherein 0.90≤a≤1, 0≤b≤0.9, 0≤c≤0.5, and 0.001≤d≤0.1; LiₐNi_{β}Co_{c}Mn_{d}GₑO₂, wherein 0.90≤a≤1, 0≤b≤0.9, 0≤c≤0.5, 0≤d≤0.5, and 0.001≤e≤0.1; LiₐNiG_{β}O₂, wherein 0.90≤a≤1 and 0.001≤b≤0.1; LiₐCoG_{β}O₂, wherein 0.90≤a≤1 and 0.001≤b≤0.1; LiₐMnG_{β}O₂, wherein 0.90≤a≤1 and 0.001≤b≤0.1; LiₐMn₂G_{β}O₄, wherein 0.90≤a≤1 and 0.001≤b≤0.1; QO₂; QS₂; LiQS₂; V₂O₅; LiV₂O₅; LiIO₂; LiNiVO₄; Li(_{3-f})J₂(PO₄)₃, wherein 0≤f≤2; Li(_{3-f})Fe₂(PO₄)₃, wherein 0≤f≤2; and LiFePO₄.

In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound in which a coating layer is added to a surface of such a compound, and it is also possible to use a mixture of the above-described compound and a compound to which a coating layer is added. The coating layer added to the surface of such a compound includes, for example, a coating element compound such as an oxide of a coating element, a hydroxide of a coating element, an oxyhydroxide of a coating element, an oxycarbonate of a coating element, or a hydroxycarbonate of a coating element. The compound constituting such a coating layer may be amorphous or crystalline. The coating element included in the coating layer may be Mg, Al, Co, K, Na, Ca, Si, Ti, V, Sn, Ge, Ga, B, As, Zr, or a mixture thereof. A method for forming the coating layer is selected within a range that does not adversely affect the physical properties of the positive electrode active material. The coating method is, for example, spray coating, dipping, or the like. A detailed coating method can be well understood by persons working in the art, and thus a detailed description thereof will be omitted.

The positive electrode active material layer may include, for example, a binder. The binder may be, for example, styrene butadiene rubber (SBR), polytetrafluoroethylene, polyvinylidene fluoride, polyethylene, or the like, but is not limited thereto, and any material used as a binder in the art may be used.

The positive electrode active material layer may include, for example, a conductive material. The conductive material may be, for example, graphite, carbon black, acetylene black, Ketjen black, carbon fibers, metal powder, or the like, but is not limited thereto, and any material used as a conductive material in the art may be used.

The positive electrode active material layer may further include additives such as a filler, a coating agent, a dispersant, and an ion-conductive auxiliary agent, in addition to the above-described positive electrode active material, solid electrolyte, binder, and conductive material.

As the filler, coating agent, dispersant, ion-conductive auxiliary agent, and the like that may be included in the positive electrode active material layer, known materials generally used in an electrode of an all-solid-state secondary battery may be used.

As the positive electrode current collector, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The thickness of the positive electrode current collector may be, for example, 1 µm to 100 µm, 1 µm to 50 µm, 5 µm to 25 µm, or 10 µm to 20 µm.

### (Negative Electrode Layer)

More specifically, the negative electrode layer may include a negative electrode current collector and a negative electrode active material layer disposed on the negative electrode current collector.

The negative electrode active material layer may include, for example, a negative electrode active material and a binder, and may further selectively include a solid electrolyte as necessary.

The negative electrode active material may include, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon may be, for example, carbon black (CB), acetylene black (AB), furnace black (FB), Ketjen black (KB), graphene, or the like, but is not necessarily limited thereto, and any material classified as amorphous carbon in the art may be used. The amorphous carbon is carbon having no crystallinity or very low crystallinity, and is distinguished from crystalline carbon or graphitic carbon. The crystalline carbon may be, for example, natural graphite, artificial graphite, or a combination thereof.

The metal/metalloid negative electrode active material includes at least one selected from the group consisting of lithium (Li), gold (Au), platinum (Pt), palladium (Pd), silicon (Si), silver (Ag), aluminum (Al), bismuth (Bi), tin (Sn), and zinc (Zn), but is not necessarily limited thereto, and any material used as a metal negative electrode active material or metalloid negative electrode active material that forms an alloy or compound with lithium in the art may be used.

The binder included in the negative electrode active material layer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any material used as a binder in the art may be used. The binder may be composed of a single binder or a plurality of different binders.

Since the negative electrode active material layer includes the binder, the negative electrode active material layer is stabilized on the negative electrode current collector. In addition, cracking of the negative electrode active material layer is suppressed despite volume change and/or relative position change of the negative electrode active material layer during charging and discharging.

The negative electrode active material layer may further include additives used in conventional all-solid-state batteries, for example, a filler, a coating agent, a dispersant, an ion-conductive auxiliary agent, and the like.

The all-solid-state battery may further include a second negative electrode active material layer disposed between the negative electrode current collector and the negative electrode active material layer by charging. The second negative electrode active material layer may be precipitated between the negative electrode current collector and the negative electrode current collector during a charging process, or may be further disposed on the negative electrode active material layer during electrode assembly. The second negative electrode active material layer may be a metal layer including lithium or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any material used as a lithium alloy in the art may be used. The second negative electrode active material layer may be formed of one of these alloys and/or lithium, or may be formed of several kinds of alloys and/or lithium.

The negative electrode current collector may be composed of, for example, a material that does not react with lithium, that is, a material that does not form either an alloy or a compound. The negative electrode current collector may include, for example, copper (Cu), stainless steel, titanium (Ti), iron (Fe), cobalt (Co), nickel (Ni), or the like, but is not necessarily limited thereto, and any material used as an electrode current collector in the art may be used. The negative electrode current collector may be composed of one of the above metals or may be composed of an alloy or coating material of two or more metals. The negative electrode current collector may be, for example, in a plate form or a foil form.

When the negative electrode active material layer includes a solid electrolyte, the solid electrolyte included in the negative electrode active material layer may be the same as or different from the solid electrolyte according to one embodiment of the present invention, and may be the same as or different from the solid electrolyte included in the solid electrolyte layer.

### (Solid Electrolyte Layer)

The solid electrolyte layer may be manufactured by mixing and drying the above-described solid electrolyte and a binder, or may be manufactured by rolling the above-described solid electrolyte powder into a certain form at a pressure of 1 ton to 10 tons.

At this time, the solid electrolyte may be in a powder form or a molded body form. The solid electrolyte in the molded body form may be, for example, in the form of a pellet, a sheet, a thin film, or the like, but is not necessarily limited thereto, and may have various forms depending on the use.

The solid electrolyte layer may further include, as necessary, a solid electrolyte such as a conventional sulfide-based solid electrolyte and/or oxide-based solid electrolyte, in addition to the above-described solid electrolyte.

The binder may be, for example, styrene butadiene rubber (SBR), polytetrafluoroethylene, polyvinylidene fluoride, polyethylene, polyvinyl alcohol, or the like, but is not limited thereto, and any material used as a binder in the art may be used. The binder of the solid electrolyte layer may be the same as or different from the binder of the positive electrode layer and the negative electrode layer.

Hereinafter, embodiments of the present invention will be described in more detail through Examples. However, the following Examples are merely preferred embodiments of the present invention, and the present invention is not limited by the following Examples.

### Example 1: Manufacture of Li₅.₅₈In₀.₀₂Sn₀.₀₅P₀.₉₃S₄.₆₅Cl₁.₁₉ Solid Electrolyte

Reactants Li₂S, P₂S₅, LiCl, InCl₃, and SnCl₄ were quantitatively measured such that x=0.02 and y=0.05 in Li_{6(1-x-y)}InₓSn_{y}P_{(1-x-y)}S_{5(1-x-y)}Cl_{1(1-x-y)+3x+4y}, which is the final product solid electrolyte, and were mixed using a planetary mill at 300 rpm for about 8 hours to form a mixture.

Next, a pressure of 300 MPa was applied to the mixture to form a pellet.

Next, the pellet was heat-treated at 550°C for about 4 hours in an argon (Ar) atmosphere to manufacture a Li₅.₅₈Al₀.₀₂Sn₀.₀₅P₀.₉₃S₄.₆₅Cl₁.₁₉ solid electrolyte.

### Example 2: Manufacture of Li₅.₂₈In₀.₀₂Sn₀.₁P₀.₈₈S₄.₄Cl₁.₃₄ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Example 3: Manufacture of Li₄.₉₈In₀.₀₂Sn₀.₁₅P₀.₈₃S₄.₁₅Cl₁.₄₉ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.15 in Li_{6(1-x-y)}InₓSn_{y}P_{(1-x-y)}S_{5(1-x-y)}Cl_{1(1-x-y)+3x+4y}, which is the final product solid electrolyte.

### Example 4: Manufacture of Li₄.₆₈In₀.₀₂Sn₀.₂P₀.₇₈S₃.₉Cl₁.₆₄ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.2 in Li_{6(1-x-y)}InₓSn_{y}P_{(1-x-y)}S_{5(1-x-y)}Cl_{1(1-x-y)+3x+4y}, which is the final product solid electrolyte.

### Example 5: Manufacture of Li₄.₀₈In₀.₀₂Sn₀.₃P₀.₆₈S₃.₄Cl₁.₉₄ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.3 in Li_{6(1-x-y)}InₓSn_{y}P_{(1-x-y)}S_{5(1-x-y)}Cl_{1(1-x-y)+3x+4y}, which is the final product solid electrolyte.

### Example 6: Manufacture of Li₃.₄₈In₀.₀₂Sn₀.₄P₀.₅₈S₂.₉Cl₂.₂₄ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.4 in Li_{6(1-x-y)}InₓSn_{y}P_{(1-x-y)}S_{5(1-x-y)}Cl_{1(1-x-y)+3x+4y}, which is the final product solid electrolyte.

### Example 7: Manufacture of Li₅.₃₁In₀.₀₁₅Sn₀.₁P₀.₈₈₅S₄.₄₂₅Cl₁.₃₃ Solid Electrolyte

A solid electrolyte was manufactured in the same manner as in Example 1, except that reactants Li₂S, P₂S₅, LiCl, InCl₃, and SnCl₄ were quantitatively measured such that x=0.015 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Example 8: Manufacture of Li₅.₂₅In₀.₀₂₅Sn₀.₁P₀.₈₇₅S₄.₃₇₅Cl₁.₃₅ Solid Electrolyte

A solid electrolyte was manufactured in the same manner as in Example 1, except that reactants Li₂S, P₂S₅, LiCl, InCl₃, and SnCl₄ were quantitatively measured such that x=0.025 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Example 9: Manufacture of Li₅.₂₂In₀.₀₃Sn₀.₁P₀.₈₇S₄.₃₅Cl₁.₃₆ Solid Electrolyte

A solid electrolyte was manufactured in the same manner as in Example 1, except that reactants Li₂S, P₂S₅, LiCl, InCl₃, and SnCl₄ were quantitatively measured such that x=0.03 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Example 10: Manufacture of Li₅.₁₆In₀.₀₄Sn₀.₁P₀.₈₆S₄.₃Cl₁.₃₈ Solid Electrolyte

A solid electrolyte was manufactured in the same manner as in Example 1, except that reactants Li₂S, P₂S₅, LiCl, InCl₃, and SnCl₄ were quantitatively measured such that x=0.04 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Example 11: Manufacture of Li₅.₁In₀.₀₅Sn₀.₁P₀.₈₅S₄.₂₅Cl₁.₄ Solid Electrolyte

A solid electrolyte was manufactured in the same manner as in Example 1, except that reactants Li₂S, P₂S₅, LiCl, InCl₃, and SnCl₄ were quantitatively measured such that x=0.05 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 1: Manufacture of Li₆PS₅Cl Solid Electrolyte

Reactants Li₂S, P₂S₅, and LiCl were mixed using a planetary mill at 300 rpm for about 8 hours to form a mixture.

Next, a pressure of 300 MPa was applied to the mixture to form a pellet.

Next, the pellet was heat-treated at 550°C in an argon (Ar) atmosphere to manufacture a Li₆PS₅Cl solid electrolyte.

### Comparative Example 2: Manufacture of Li₅.₅₈In₀.₀₂P₀.₉₈S₄.₉Cl₁.₀₄ Solid Electrolyte

A solid electrolyte was manufactured in the same manner as in Example 1, except that reactants Li₂S, P₂S₅, LiCl, and InCl₃ were quantitatively measured such that x=0.02 and y=0 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 3: Manufacture of Li₅.₄Sn₀.₁P₀.₉S₄.₅Cl₁.₃ Solid Electrolyte

A solid electrolyte was manufactured in the same manner as in Example 1, except that reactants Li₂S, P₂S₅, LiCl, and SnCl₄ were quantitatively measured such that x=0 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 4: Manufacture of Li₅.₇₆In₀.₀₂Sn₀.₀₂P₀.₉₆S₄.₈Cl₁.₁ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.02 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 5: Manufacture of Li₂.₈₈In₀.₀₂Sn₀.₅P₀.₄₈S₂.₄Cl₂.₅₄ Solid Electrolyte

A solid electrolyte was manufactured in the same manner as in Example 1, except that reactants Li₂S, P₂S₅, LiCl, InCl₃, and SnCl₄ were quantitatively measured such that x=0.02 and y=0.5 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 6: Manufacture of Li₅.₃₇In₀.₀₀₅Sn₀.₁P₀.₈₉₅S₄.₄₇₅Cl₁.₃₁ Solid Electrolyte

A solid electrolyte was manufactured in the same manner as in Example 1, except that reactants Li₂S, P₂S₅, LiCl, InCl₃, and SnCl₄ were quantitatively measured such that x=0.005 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 7: Manufacture of Li₅.₃₄In₀.₀₁Sn₀.₁P₀.₈₉S₄.₄₅Cl₁.₃₂ Solid Electrolyte

A solid electrolyte was manufactured in the same manner as in Example 1, except that reactants Li₂S, P₂S₅, LiCl, InCl₃, and SnCl₄ were quantitatively measured such that x=0.01 and y=0.1 in Li_{6(1-x-y)}InₓSn_{y}P_{(1-x-y)}S_{5(1-x-y)}Cl_{1(1-x-y)+3x+4y}, which is the final product solid electrolyte.

### Comparative Example 8: Manufacture of Li₅.₀₄In₀.₀₆Sn₀.₁P₀.₈₄S₄.₂Cl₁.₄₂ Solid Electrolyte

A solid electrolyte was manufactured in the same manner as in Example 1, except that reactants Li₂S, P₂S₅, LiCl, InCl₃, and SnCl₄ were quantitatively measured such that x=0.06 and y=0.1 in Li_{6(1-x-y)}InₓSn_{y}P_{(1-x-y)}S_{5(1-x-y)}Cl_{1(1-x-y)+3x+4y}, which is the final product solid electrolyte.

Tables 1 and 2 below summarize experimental results according to Experimental Examples 2 and 3, which will be described later, with respect to the solid electrolytes of the Examples and Comparative Examples.

**[Table 1]**

| | Composition | [Li]/[P] | [In]/[P] | [Sn]/[P] | [S]/[P] | [Cl]/[P] |
|---|---|---|---|---|---|---|
| Comparative Example 1 | Li₆PS₅Cl | 6 | 0.000 | 0.000 | 5.000 | 1.000 |
| Comparative Example 2 | Li_{5.58}In_{0.02}P_{0.98}S_{4.9}Cl_{1.04} | 6 | 0.020 | 0.000 | 5.000 | 1.061 |
| Comparative Example 3 | Li_{5.4}Sn_{0.1} P_{0.9} S_{4.5}Cl_{1.3} | 6 | 0.000 | 0.111 | 5.000 | 1.444 |
| Comparative Example 4 | Li_{5.76}In_{0.02}Sn_{0.02}P_{0.96}S_{4.8}Cl_{1.1} | 6 | 0.021 | 0.021 | 5.000 | 1.146 |
| Example 1 | Li_{5.58}In_{0.02}Sn_{0.05}P_{0.93}S_{4.65}Cl_{1.19} | 6 | 0.022 | 0.054 | 5.000 | 1.280 |
| Example 2 | Li_{5.28}In_{0.02}Sn_{0.1}P_{0.88}S_{4.4}Cl_{1.34} | 6 | 0.023 | 0.114 | 5.000 | 1.523 |
| Example 3 | Li_{4.98}In_{0.02}Sn_{0.15}P_{0.83}S_{4.15}Cl_{1.49} | 6 | 0.024 | 0.181 | 5.000 | 1.795 |
| Example 4 | Li_{4.68}In_{0.02}Sn_{0.2}P_{0.78}S_{3.9}Cl_{1.64} | 6 | 0.026 | 0.256 | 5.000 | 2.103 |
| Example 5 | Li_{4.08}In_{0.02}Sn_{0.3}P_{0.68}S_{3.4}Cl_{1.94} | 6 | 0.029 | 0.441 | 5.000 | 2.853 |
| Example 6 | Li_{3.48}In_{0.02}Sn_{0.4}P_{0.58}S_{2.9}Cl_{2.24} | 6 | 0.034 | 0.690 | 5.000 | 3.862 |
| Comparative Example 5 | Li_{2.88}In_{0.02}Sn_{0.5}P_{0.48}S_{2.4}Cl_{2.54} | 6 | 0.042 | 1.042 | 5.000 | 5.292 |
| Comparative Example 6 | Li_{5.37}In_{0.005}Sn_{0.1}P_{0.895}S_{4.475}Cl_{1.31} | 6 | 0.006 | 0.112 | 5.000 | 1.464 |
| Comparative Example 7 | Li_{5.34}In_{0.01}Sn_{0.1}P_{0.89}S_{4.45}Cl_{1.32} | 6 | 0.011 | 0.112 | 5.000 | 1.483 |
| Example 7 | Li_{5.31}In_{0.015}Sn_{0.1}P_{0.885}S_{4.425}Cl_{1.33} | 6 | 0.017 | 0.113 | 5.000 | 1.503 |
| Example 8 | Li_{5.25}In_{0.025}Sn_{0.1}P_{0.875}S_{4.375}Cl_{1.35} | 6 | 0.029 | 0.114 | 5.000 | 1.543 |
| Example 9 | Li_{5.22}In_{0.03}Sn_{0.1}P_{0.87}S_{4.35}Cl_{1.36} | 6 | 0.034 | 0.115 | 5.000 | 1.563 |
| Example 10 | Li_{5.16}In_{0.04}Sn_{0.1}P_{0.86}S_{4.3}Cl_{1.38} | 6 | 0.047 | 0.116 | 5.000 | 1.605 |
| Example 11 | Li_{5.1}In_{0.05}Sn_{0.1}P_{0.85}S_{4.25}Cl_{1.4} | 6 | 0.059 | 0.118 | 5.000 | 1.647 |
| Comparative Example 8 | Li_{5.04}In_{0.06}Sn_{0.1}P_{0.84}S_{4.2}Cl_{1.42} | 6 | 0.071 | 0.119 | 5.000 | 1.690 |

**[Table 2]**

| | Composition | x | y | Ionic Conductivity |
|---|---|---|---|---|
| | | | | [mS/cm] |
| Comparative Example 1 | Li₆PS₅Cl | 0 | 0 | 3.2 |
| Comparative Example 2 | Li_{5.58}In_{0.02}P_{0.98}S_{4.9}Cl_{1.04} | 0.02 | 0 | 1.81 |
| Comparative Example 3 | Li_{5.4}Sn_{0.1}P_{0.9}S_{4.5}Cl_{1.3} | 0 | 0.1 | 1.61 |
| Comparative Example 4 | Li_{5.76}In_{0.02}Sn_{0.02}P_{0.96}S_{4.8}Cl_{1.1} | 0.02 | 0.02 | 2.31 |
| Example 1 | Li_{5.58}In_{0.02}Sn_{0.05}P_{0.93}S_{4.65}Cl_{1.19} | | 0.05 | 3.48 |
| Example 2 | Li_{5.28}In_{0.02}Sn_{0.1}P_{0.88}S_{4.4}Cl_{1.34} | | 0.1 | 4.46 |
| Example 3 | Li_{4.98}In_{0.02}Sn_{0.15}P_{0.83}S_{4.15}Cl_{1.49} | | 0.15 | 4.37 |
| Example 4 | Li_{4.68}In_{0.02}Sn_{0.2}P_{0.78}S_{3.9}Cl_{1.64} | | 0.2 | 3.86 |
| Example 5 | Li_{4.0}In_{0.02}Sn_{0.3}P_{0.68}S_{3.4}Cl_{1.94} | | 0.3 | 3.53 |
| Example 6 | Li_{3.48}In_{0.02}Sn_{0.4}P_{0.58}S_{2.9}Cl_{2.24} | | 0.4 | 3.47 |
| Comparative Example 5 | Li_{2.88}In_{0.02}Sn_{0.5}P_{0.48}S_{2.4}Cl_{2.54} | | 0.5 | 3.13 |
| Comparative Example 6 | Li_{5.37}In_{0.005}Sn_{0.1}P_{0.895}S_{4.475}Cl_{1.31} | 0.005 | 0.1 | 2.23 |
| Comparative Example 7 | Li_{5.34}In_{0.01}Sn_{0.1}P_{0.89}S_{4.45}Cl_{1.32} | 0.01 | | 2.25 |
| Example 7 | Li_{5.31}In_{0.015}Sn_{0.1}P_{0.885}S_{4.425}Cl_{1.33} | 0.015 | | 3.75 |
| Example 8 | Li_{5.25}In_{0.025}Sn_{0.1}P_{0.875}S_{4.375}Cl_{1.35} | 0.025 | | 4.54 |
| Example 9 | Li_{5.22}In_{0.03}Sn_{0.1}P_{0.87}S_{4.35}Cl_{1.36} | 0.03 | | 4.39 |
| Example 10 | Li_{5.16}In_{0.04}Sn_{0.1}P_{0.86}S_{4.3}Cl_{1.38} | 0.04 | | 3.64 |
| Example 11 | Li_{5.1}In_{0.05}Sn_{0.1}P_{0.85}S_{4.25}Cl_{1.4} | 0.05 | | 3.23 |
| Comparative Example 8 | Li_{5.04}In_{0.06}Sn_{0.1}P_{0.84}S_{4.2}Cl_{1.42} | 0.06 | | 3.12 |

### Experimental Example 1: XRD Diffraction Analysis Experiment

An XRD (X-ray diffraction) analysis experiment was performed on the solid electrolytes manufactured according to Example 1 and Comparative Example 1, and the results are shown in FIG. 1.

Referring to FIG. 1, the solid electrolytes manufactured according to Example 1 and Comparative Example 1 exhibited a peak in a range of 30.2°≤2θ≤30.3° when analyzed by an X-ray diffraction (XRD) pattern. Through this, it was confirmed that the solid electrolytes of the Example and Comparative Example have an argyrodite-based crystal structure.

### Experimental Example 2: Composition Analysis and Ionic Conductivity Evaluation of Solid Electrolyte

### (1) Composition Analysis

The composition of the solid electrolyte was measured using ICP (Inductively Coupled Plasma Emission Spectrometry) equipment. More specifically, all synthesized solid electrolyte samples were dissolved in an HNO₃ solvent, diluted with DI water, and then contents of elements were measured using ICP equipment.

### (2) Evaluation of Ionic Conductivity (30°C, 0.1C)

An experiment for evaluating ionic conductivity of the solid electrolyte was performed using a pressure powder cell. Specifically, after the synthesized solid electrolyte was pulverized, it was manufactured in a pellet form under a pressure of 300 MPa. Thereafter, a cell was manufactured at a pressure of 70 MPa using SUS as a working electrode. Thereafter, impedance was measured by applying a voltage of 10 mV at 30°C.

Referring to Tables 1 and 2, it was confirmed that the solid electrolytes of Examples 1 to 11, in which both indium and tin were doped and the doping amounts of indium and tin or the ranges of x and y were appropriately controlled within the ranges according to the present invention, had improved ionic conductivity compared with Comparative Example 1, which is a basic argyrodite crystal structure solid electrolyte.

In contrast, it was confirmed that the solid electrolyte of Comparative Example 2, which was doped only with indium, and the solid electrolyte of Comparative Example 3, which was doped only with tin, rather had lower ionic conductivity than Comparative Example 1, which is a basic argyrodite crystal structure solid electrolyte.

In addition, in the cases of Comparative Examples 4, 5, 6, 7, and 8, in which both indium and tin were doped but the doping amounts of indium and tin or the ranges of x and y were not appropriately controlled, it was also confirmed that ionic conductivity rather decreased compared with Comparative Example 1, which is a basic argyrodite crystal structure solid electrolyte.

When the Examples are compared in more detail, it was confirmed that, when the doping amounts of indium and tin or the ranges of x and y are more appropriately controlled, ionic conductivity was greatly improved to a level of 4.0 mS/cm or more.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A sulfide-based solid electrolyte comprising a compound containing lithium (Li), phosphorus (P), sulfur (S), and a halogen element (D), and having an argyrodite-based crystal structure,
wherein at least a portion of the crystal structure is doped with indium (In) and tin (Sn),
and
wherein ionic conductivity at 30°C is 3.21 mS/cm or more.

2. The sulfide-based solid electrolyte of claim 1,
wherein the compound has a molar ratio of indium (In) to the compound of 0.013 to 0.055.

3. The sulfide-based solid electrolyte of claim 1,
wherein the compound has a molar ratio of indium (In) to phosphorus (P), [In]/[P], of 0.014 to 0.065.

4. The sulfide-based solid electrolyte of claim 1,
wherein the compound has a molar ratio of tin (Sn) to the compound of 0.035 to 0.45.

5. The sulfide-based solid electrolyte of claim 1,
wherein the compound has a molar ratio of tin (Sn) to phosphorus (P), [Sn]/[P], of 0.03 to 0.85.

6. The sulfide-based solid electrolyte of claim 1,
wherein the compound has a molar ratio of lithium (Li) to the compound of 3 to 5.7.

7. The sulfide-based solid electrolyte of claim 1,
wherein the compound has a molar ratio of sulfur (S) to the compound of 2.7 to 4.75.

8. The sulfide-based solid electrolyte of claim 1,
wherein the compound has a molar ratio of phosphorus (P) to the compound of 0.55 to 0.945.

9. The sulfide-based solid electrolyte of claim 1,
wherein the compound has a molar ratio of the halogen element (D) to the compound of 1.15 to 2.4.

10. The sulfide-based solid electrolyte of claim 1,
wherein the compound has a molar ratio of the halogen element (D) to phosphorus (P), [D]/[P], of 1.2 to 4.5.

11. The sulfide-based solid electrolyte of claim 1,
wherein the compound is represented by the following Chemical Formula 1:
[Chemical Formula 1] Li_{6(1-x-y)}InₓSn_{y}P_{(1-x-y)}S_{5(1-x-y)}D_{1(1-x-y)+3x+4y}
wherein, in Chemical Formula 1, 0.013≤x≤0.055 and 0.035≤y≤0.45, and D is a halogen element and is F, Cl, Br, I, or a combination thereof.

12. The sulfide-based solid electrolyte of claim 11,
wherein 0.02≤x≤0.035.

13. The sulfide-based solid electrolyte of claim 11,
wherein 0.08≤y≤0.17.

14. The sulfide-based solid electrolyte of claim 1,
wherein the compound exhibits a peak in a range of 30.2°≤2θ≤30.3° when analyzed by an X-ray diffraction (XRD) pattern.

15. An all-solid-state battery comprising:
a positive electrode layer;
a negative electrode layer; and
a solid electrolyte layer positioned between the positive electrode layer and the negative electrode layer,
wherein at least one of the positive electrode layer, the negative electrode layer, and the solid electrolyte layer includes the solid electrolyte of claim 1.
